Europäisches Patentamt

European Patent Office

Office européen des brevets

(11) Veröffentlichungsnummer : **0 119 668**
**B1**

(12) # EUROPÄISCHE PATENTSCHRIFT

(45) Veröffentlichungstag der Patentschrift :
**30.09.87**

(21) Anmeldenummer : **84200407.9**

(22) Anmeldetag : **20.03.84**

(51) Int. Cl.⁴ : **B 62 D 25/02**, B 62 D 33/02,
B 62 D 29/00, E 04 C 2/08,
B 65 D 90/08

(54) Wandkonstruktion eines Behälters, einer Karrosserie oder eines Kontainers.

(30) Priorität : **21.03.83 NL 8301001**

(43) Veröffentlichungstag der Anmeldung :
**26.09.84 Patentblatt 84/39**

(45) Bekanntmachung des Hinweises auf die Patenterteilung : **30.09.87 Patentblatt 87/40**

(84) Benannte Vertragsstaaten :
**AT BE CH DE FR GB IT LI LU NL SE**

(56) Entgegenhaltungen :
**DE-A- 1 480 643**
**DE-B- 1 297 836**
**GB-A-  813 143**
**GB-A-  966 751**

(73) Patentinhaber : **Smit, Jaques Willem**
**Oostdijk 73**
**NL-3261 KC Oud-Beijerland (NL)**

(72) Erfinder : **Smit, Jaques Willem**
**Oostdijk 73**
**NL-3261 KC Oud-Beijerland (NL)**

(74) Vertreter : **van der Beek, George Frans et al**
**Nederlandsch Octrooibureau Johan de Wittlaan 15**
**P.O. Box 29720**
**NL-2502 LS 's-Gravenhage (NL)**

**Beschreibung**

Die Erfindung bezieht sich auf eine Wandkonstruktion eines Behälters, eines Fahrzeugaufbaues oder eines containers, gebildet durch eine Reihe durch Schnappverriegelungen (snap-lock) miteinander verbundener, im wesentlichen gleicher Platten, wie z. B. stranggepressten Leichtmetallprofilen, wobei an einer Seite (meistens der Aussenseite des Behälters) eine durchgehend ebene Seitenwandoberfläche gebildet wird, während an der anderen Seite bei jeder Verbindung ein im wesentlichen kastenförmiger Ständer gebildet ist, wobei jede Platte an ihrer einen Längskante mit einem rinnenförmigen Profil versehen ist, dessen Öffnung hauptsächlich in der Ebene der Platte gelegen ist, mit einer am Rand befindlichen, einwärts gerichteten, widerhakenförmigen Rippe und mit einem im Gebiet des Ueberganges des ebenen Plattenteiles in die anschliessende Rinnenwand vorgesehenen Teil eines Einsteckscharniers, während an der anderen Längskante jeder Platte beim Ende des ebenen Plattenteiles ein komplementäres Gegenstück des Einsteckscharniers und in einiger Entfernung davon an der Plattenoberfläche eine komplementäre widerhakenförmige Gegenrippe vorgesehen ist, welches Gegenstück und welche Gegenrippe an der gleichen Seite der Platte wie die Rinne gelegen sind, derart, dass die Rippen und Scharnierteile sich alle parallel zu einander erstrecken und so weit von einander entfernt sind, dass nach dem Einstecken der komplementären Scharnierteile zweier Platten ineinander und dem darauffolgenden Verschwenken der beiden entgegengesetzt gerichteten Rippen mit Widerhaken zueinander, die Rippen unter einer Normalkraft elastisch aneinander entlang und verriegelnd hintereinander einschnappbar sind, damit die Platten in einer einzigen Ebene senkrecht zur Schnappverbindung kraftschlüssig im wesentlichen bleibend miteinander verbunden sind, wobei an jenem Teil jener Platte welcher bei Montage mit der Rinne der nächsten Platte zusammenwirkt, ein in jene Rinne hineinragende Längslippe, welche im eingeschnapten Zustand parallel zur nächsten Rinnenwand verläuft, vorgesehen ist.

Wandkonstruktionen der obenbeschriebenen Art sind in vielen Ausführungsformen allgemein bekannt und werden in grossen Stuckzahlen angewendet. Die am Ende erwähnte Längslippe ist jedoch ausschliesslich bekannt aus der britischen Patentschrift GB-A-966 751, insbesondere Figuren 6 und 7. Die mit der obenbeschriebenen Konstruktion erreichbaren Vorteile sind ebenso allgemein bekannt, wie z. B. die Konstruktion einer einseitig ebenen Wand, die schnelle Montage, das geringe Gewicht wenn, wie praktisch in allen Fällen, leichte Materialien verwendet werden, wie z. B. extrudierte Aluminiumlegierungen oder Kunststoffe. Ein wesentlicher Nachteil besteht jedoch darin, dass die Verbindung parallel zu sich selbst nur kraftschlüssig ist und nicht ebenfalls formschlüssig, wodurch gegenseitige Verschiebungen der Platten in Richtung der Verbindung möglich bleiben. Die dazu benötigten Kräfte sind stark abhängig vom Material, von der Stärke der verwendeten Materialien, mitunter im Zusammenhang mit den gewählten Materialdicken, jedoch auch in bedeutendem Masse in Abhängigkeit von den Toleranzen der Dimensionen. Letztere können sich durch fortschreitenden Verschleiss, z. B. des Strangpresswerkzeuges, allmählich ändern, wodurch Platten aus einer ersten Serie und einer späteren Serie stark unterschiedliche Kräfte erfordern, um gegenseitig verschoben werden zu können. Dieser Nachteil gilt in verstärktem Masse bei der Ausführung nach Figuren 6 und 7 der genannten britischen Patentschrift. Dabei liegt die Längslippe satt an gegen die untere Hälfte der rechten Seitenwand der Rinne. Dies bedeutet dass in gewissen Toleranzkombinationen die eingeschnappte Verbindung links von Ziffer 218 nicht anliegen kann, wodurch dort ein Spalt offenbleibt. Ein Spalt an jener Stelle ist nicht nur aus esthätischen Gründen unzulässig, er fördert auch das Risiko von Korrosion. Jedes Scharnier sollte im Ganzen zulässigen Toleranzbereich der Einzelteile immer links vom Punkt 218 anliegen, damit eine bleibend verschlossene Verbindung erreicht wird. Im allgemeinen liegt der Punkt 218 etwa auf der Mittellinie des Einsteckscharnieres bei dessen Verschwenckung während der Montage.

Bei der Konstruktion nach der britischen Patentschrift und auch bei moderneren Konstruktionen kommt es in der Praxis regelmässig vor, dass eine in sich noch genügend formschlüssige Verbindung zu leicht in Längsrichtung verschiebbar ist. Weil aber auch bei Verbindungen mit korrekten Toleranzen im Falle von harten Stössen oder schwerer Belastung das Risiko besteht, dass sich eine oder mehrere Verbindungen in Längsrichtung verschieben, wodurch die Wand eine geschränkte Struktur bekommt, und die Stirnenden der Wand sägezahnförmig werden, besteht diesbezüglich das Bedürfnis einer verbesserten Konstruktion. Bei den vorliegenden Wänden, insbesondere von Karosserien und Behältern, werden die Platten, welche die Wand bilden, senkrecht verwendet. Es ist allgemein gebräuchlich die Wände ringsherum auf einer starren Grundrahmenstruktur zu montieren, z. B. mit Hilfe von Bolzen oder Nieten, wodurch die obenbeschriebene Verschränkungen und gegenseitigen Verschiebungen bis zu gewissen Belastungen vermieden werden. Wenn aber, obgleich eine Grundrahmenstruktur verwendet ist, eine Überbelastung oder eine hohe Torsionsbelastung auf den Aufbau oder Behälter einwirkt, z. B. infolge einer Kollision, oder eines Stosses, treten immer noch bleibende Verschränkungen auf. Es ist bekannt dass diese fast nie vollständig reparabel sind, so dass ein derartiger Behälter verloren ist. Obendrein ist es wünschenswert, wenn z. B. nach einem Unfall wobei zwar keine gegenseitige Verschiebungen aufgetreten sind, jedoch einige Platten ersetzt werden müssen, wobei die Toleranzen der neuen Platten selten mit den der Ursprünglichen übereinstimmen, dass der Behälter nach der Reparatur wieder genügend verbindungssteif ist, trotz der nicht korrekten Passungen.

Wenn es mit einfachen Verbesserungen möglich wäre, die gegenseitige Längsverschiebung zu beschränken oder vorzugsweise völlig zu verhindern, wäre auch die Herstellung selbsttragender Behälter möglich, welche ohne Grundrahmen genügend verbindungssteif sind. Im letzten Fall, wo ein steifer Grundrahmen fehlt, ist es aber obendrein nötig, dass ein Durchhängen der Wandkonstruktion unter Belastung durch elastisches Dehnen der Schnappverbindungen an der Unterseite ebenfalls vermieden wird.

Die Erfindung beabsichtigt nun die oben beschriebenen Nachteile zu vermeiden und mit einfachen Mitteln den erwünschten Effekt zu erreichen, wodurch die Verbindung parallel zu sich selbst ebenfalls formschlüssig wird.

Die im Oberbegriff des Anspruchs 1 beschriebene Wandkonstruktion ist nach der Erfindung dadurch gekennzeichnet, dass die Längslippe als Längsverbindungslippe mit einer oder mehreren Bolzenverbindungen oder dergleichen an der Rinne befestigbar ist, von welcher Längsverbindungslippe sich der Bereich der (Bolzen) Verbindung nach dem Einschnappen in der Nähe der Rinne unter Bildung eines geringen Spaltes erstreckt, derart dass dieser Spalt mittels der Bolzenverbindung unter elastischer Verformung der Längslippe verringert wird und zumindest im Bereich der Verbindung die Längslippe fest gegen eine Innenwand der Rinne angezogen ist. Durch die Anordnung der Längsverbindungslippe an der einen Platte, parallel zu und nahe einer der Wände der Rinne der nächsten Platte, und die Befestigung jener Teile aneinander nach der Montage mit Hilfe einer oder mehrerer Bolzen- oder Nietenverbindungen, wird nicht nur eine mögliche Verschiebung in Längsrichtung der Verbindung verhindert, sondern obendrein noch eine bedeutende Versteifung gegen Durchbiegung erreicht. Weil sich die Längsverbindungslippe über die ganze Länge der Schnappverbindung erstreckt, können nach Wunsch soviele Bolzen oder gleichartige Verbindungen angewendet werden wie erwünscht ist.

Im Zusammenhang mit den schon früher genannten und in der Praxis aus wirtschaftlichen Gründen notwendigen grossen Toleranzen und daraus resultierenden grossen Unterschieden im Schubwiderstand der Schnappverbindungen, sollte es, unabhängig von den auftretenden Toleranzen, immer gewährleistet sein, dass die Schnappverbindung korrekt und vollständig einschnappt ohne dass die Längsverbindungslippe dies verhindern könnte, indem sie frühzeitig gegen die Wände der Rinne anstossen würde. Deshalb werden die Masse derart gewählt, dass sich immer zwischen der Verbindungslippe und der Rinne ein geringer Spalt einstellt. Dank sei der Elastizität der Längsverbindungslippe kann bei der Montage der Bolzenverbindung oder dergleichen dieser geringe Spalt leicht zugepresst werden, wodurch eine vollwertige Verbindung immer gesichert ist.

Eine besonders bevorzugte Ausführungsform wird dadurch gekennzeichnet, dass die in die Rinne hineinragende Längsverbindungslippe mit einem Endflansch versehen ist, welcher Endflansch sich nach dem Einschnappen mit geringem Spalt parallel zum Boden der Rinne erstreckt, wobei mit den Verbindungen die Längsverbindungslippe über den Endflanschen am Boden der Rinne befestigbar ist.

Die Ergänzung der Längsverbindungslippe mit dem Endflansch welcher sich parallel zum boden der Rinne und in dessen Nähe erstreckt, ist deshalb so wirksam, weil bei vielen Wandkonstruktionen bereits Bolzenverbindungen oder dergleichen vorhanden sind, z. B. um die Wand über den als Ständer funktionierenden Rinnenboden an einem Grundrahmen und/oder an der einen oder anderen Form einer Innenverkleidung der Karrosserie oder des Kontainers zu befestigen. Auch hier können wiederum über die ganze Länge der Verbindung, mit oder ohne durchgehende Innenverkleidung, soviel Bolzen oder dergleichen montiert werden wie nötig sind. Jeder dieser verbindet den Endflansch über die Verbindungslippe der einen Platte mit dem Rinnenboden der anderen Platte, wodurch sich diese im Falle des Durchbiegens einer selbsttragenden Wand gegenseitig nicht mehr in Längsrichtung verschieben können, ebensowenig wie in Querrichtung. Je nach der Situation können mit einem, einigen oder allen Bolzen oder Nieten alle mögliche Arten von Innenverkleidung mit befestigt werden. Vor allem erhöht eine durchgehende Innenverkleidung z. B. aus Sperrholzplatten oder Aluminiumplatten in bedeutendem Masse die Steifigkeit und das selbsttragende Vermögen der Wandkonstruktion. Es wird nicht nur die Verbindungssteifigkeit des ganzen Behälters, der aus solchen Wänden gebaut ist, bedeutend vergrössert, sondern es wird auch jede Wand an sich bedeutend biege- und Verwindungssteifer.

Eine weitere Ausführungsform der Erfindung wird im unabhängigen Anspruch 4 dargestellt.

Einigermassen abhängig von der angewandten Form und Lage der verbesserten Schnappverbindung nach der Erfindung, wird beim Zusammendrücken des Spaltes zufolge des Anziehens der Bolzenverbindung durch die elastische Verformung der Längsverbindungslippe eine mehr oder weniger grosse Erhöhung der Schliesskraft der Schnappverbindung auftreten, und zwar entweder des Einsteckscharniers oder der zusammenwirkenden Widerhakenrippen.

Da die neue verbesserte Verbindung der Platten nicht nur für Wände verwendet werden kann, sondern auch für viele andere Anwendungsfälle, schliesst die Erfindung auch die beschriebenen Platten in sich ein.

Weitere Merkmale der Erfindung werden anhand der nachfolgenden Figurbeschreibung bevorzugter Ausführungsformen erläutert.

Figur 1 zeigt eine Wandkonstruktion mit der Schnappverbindung nach der Erfindung ;

Figur 2 zeigt eine alternative Ausführungsform der erfindungsgemässen Wandkonstruktion ;

Figuren 3 und 4 zeigen weitere Ausführungsformen der erfindungsgemässen Wandkonstruktion.

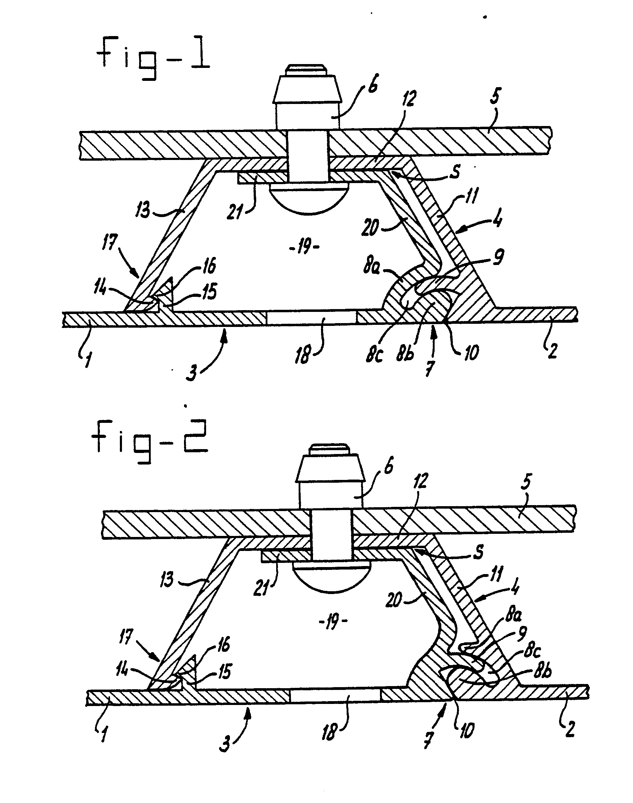

Weil die Ausführungsformen nach den Figuren 1, 2, 3 und 4 in allen wesentlichen Punkten einander gleich sind, werden sie nachstehend gleichzeitig besprochen. Die Unterschiede beziehen sich ausschliesslich auf Anwendung des Erfindungsgedankens bei bekannten Schnappverbindungen verschiedener Konstruktion.

In den Figuren sind mit 1 und 2 zwei Platten bezeichnet, welche mittels der vorliegenden Schnappverbindung bleibend miteinander verbunden sind. Beide Platten sind im Wesen gleich, was bedeutet, dass jede Platte an ihrer einen Längskante den rinnenförmigen Teil 4 der Schnappverbindung trägt und an ihrer anderen Längskante den die Rinne abschliessenden Teil 3 der Schnappverbindung. Ohne das Wesen der Verbindung zu beeinträchtigen, können jedoch breitere oder schmälere Platten miteinander kombiniert werden, wobei sich die unterschiedliche Breite in der zwischengelegenen einfachen Wand zwischen den beiden Längs-Endprofilen jeder Platte auswirkt.

Selbstverständlich können auch anders geformte Endplatten in den Bereich der Erfindung fallen. Die Figuren zeigen eine Schnappverbindung in eingeschnapptem, also montiertem Zustand. Im dargestellten Beispiel ist die Aussenwand, die von den Platten 1, 2, usw. gebildet wird, an der Innenseite wahlweise mit einer Auskleidung 5 versehen. Die durch die trapezförmigen Rinnen 4 gebildeten Ständer 19 stellen die Befestigungsrippen für die Innenauskleidung 5 dar. Mit schematisch dargestellten Bolzen 6, wovon nur einer abgebildet ist, von welchen jedoch mehrere in einer Reihe angeordnet sein können, ist die Innenauskleidung 5 am Ständer 19 der Aussenwand 1, 2, usw., befestigt. Es wird einleuchten, dass anstelle der abgebildeten Nietbolzen 6, gewöhliche Bolzen und Mutterverbindungen, jedoch auch Nieten oder dergleichen angewendet werden können. Sowohl lösbare als auch nicht mehr lösbare Verbindungselemente sind verwendbar.

Die bekannten Elemente der Schnappverbindung werden durch ein als Ganzes mit 7 bezeichnetes Einsteckscharnier gebildet. Von diesem Scharnier bildet die Längsnaht 10 in der Aussenoberfläche der Platten 1 und 2 die virtuelle Achse des Scharniers. Das Einsteckscharnier wird durch einen kreisbogenförmigen Aufnahmeraum 8c, begrenzt durch die Wände 8a und 8b gebildet, welche zum Verschlussteil 3 der Platte 1 gehören. In den Aufnahmeteil passt ein entsprechender kreisbogenförmiger Einsteckteil 9 der Platte 2, der sich an der Stelle befindet wo die Platte 2 in die Rinne 4 übergeht. Die obenbeschriebene Konstruktion ist in Figur 1 abgebildet, während die Figur 2 eine funktionell völlig gleichwertige und ebenso bekannte spiegelbildliche Konstruktion zeigt. Es wurden dabei für gleiche Teile die gleichen Bezugszeichen verwendet. Hier ist der Einsteckteil 9 am Verschlussteil 3 der platte 1 befestigt, während der Aufnahmespalt 8c mit den Begrenzungswänden 8a und 8b in der Platte 2 am Ort des Ueberganges von der Platte 2 in ihre Rinne 4 angeordnet ist.

Die Rinne 4 wird durch drei Seitenwände 11, 12 und 13 gebildet, welche öfters trapezförmig ausgebildet sind. Der Boden 12 der Rinne erstreckt sich dabei parallel zu den Platten 1 und 2. Nahe dem Ende der Seitenwand 13 der Rinne 4, wo jenes Ende an der Innenseite der Platte 1 anliegt, befindet sich ein nach innen gekehrter Widerhaken 14. Dieser wirkt zusammen mit einer aus der Platte 1 nach innen vorstehenden Rippe 15 mit Widerhaken 16. Die Widerhaken 14 und 16 sind wie gebräuchlich mit abgewinkelten Gleitflächen versehen, welche bei der Montage aufeinander gleiten und dabei die Rinne 4 elastisch so weit ausdehnen bis die Widerhaken zurückfedernd in einander einschnappen können, um eine unzerbrechliche Verbindung zu bilden. Beim ersten Zusammensetzen der Platten 1 und 2 und beim anschliessenden Durchdrücken und gegenseitigen Einschnappen der Widerhaken 14 und 16, scharnieren die Platten 1 und 2 gegenseitig um die virtuelle Achse 10, indem der Einsteckteil 9 tiefer in die Aufnahmenute 8c hineinschwenkt. Bei richtigen Dimensionen und Toleranzen liegen die Aussenflächen der Platten 1 und 2 in der gleichen Ebene. Es versteht sich, dass die oben beschriebene Konstruktion und das Verfahren der Montage für alle Konstruktionen, die in den Figuren 1 bis 4 abgebildet sind, gelten.

Nach der Erfindung ist eine in Längsrichtung sich erstreckende Verbindungslippe 20 vorgesehen, welche in einiger Entfernung parallel zur Seitenwand 11 der Rinne 14 verläuft, jedoch ein Ganzes mit der Platte 1 bildet. Dazu ist die Verbindungslippe 20 nach Figur 1 am Ende der Wand 8a des Aufnahmeteiles des Einsteckscharniers 7 angebracht. Nahe beim Boden 12 der Rinne setzt sich die Verbindungslippe 20 mit einem Endflansch 21 fort, welcher sich parallel zum Boden 12 der Rinne erstreckt. Damit das Einschnappen immer richtig stattfinden kann, obgleich Unterschiede in den Dimensionen der Schnappverbindung auftreten, ist es erwünscht, die Dimensionen der Verbindungslippe 20 und des Endflansches 21 derart zu wählen, dass immer ein geringer Spalt S zwischen dem Endflansch 21 und dem Boden 12 der Rinne nach dem Einschnappen und vor dem Befestigen der Verbindungselemente 6 besteht. Es ist dann nur mehr eine geringe elastische Verformung notwendig um den Endflansch 21 mit Hilfe der Verbindungselemente 6 kräftig gegen den Boden 12 der Rinne zu drücken. Diese geringe elastische Verformung hat noch einen zusätzlichen positiven Effekt, indem beim Wegdrücken des Spaltes S die Verbindungslippe 20 (in den Abbildungen 1, 2 und 3) ein wenig nach rechts versetzt wird, wodurch vor allem in der Ausführung nach Abbildung 1 das Einsteckscharnier 7 ein vermindertes Spiel bekommt und/oder fester angedrückt wird.

Die Ausführung nach Figur 2 stimmt praktisch völlig überein mit der obenbeschriebenen Ausführung nach Figur 1. Die Verbindungslippe 20 ist hier jedoch mit dem Einsteckteil 9 des Einsteckscharniers 7 verbunden.

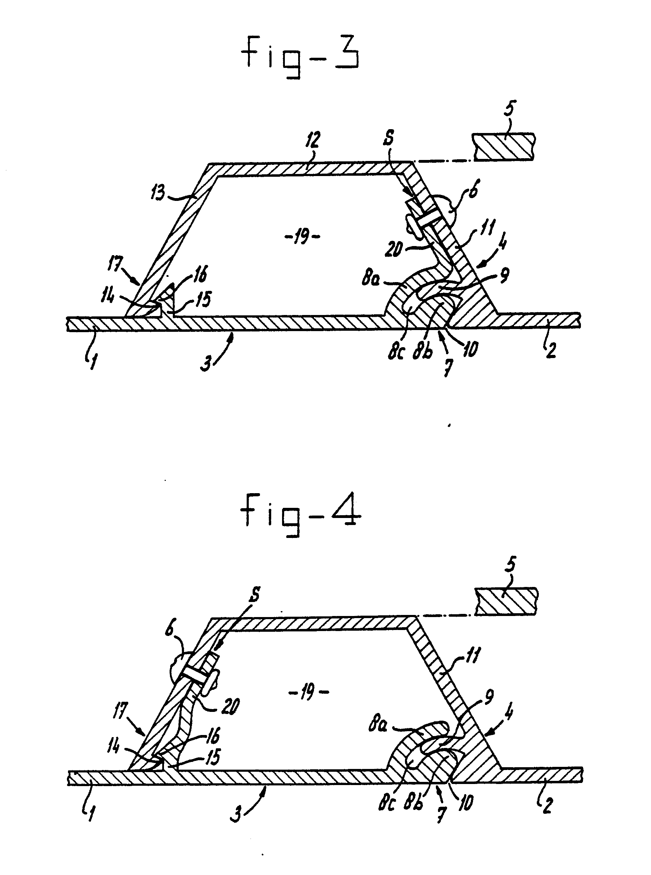

Obwohl in den Figuren 1 und 2 bevorzugte Ausführungsformen der Erfindung abgebildet sind, ist eine in den Figuren 3 und 4 abgebildete einfachere Ausführungsform ebenfalls möglich. Vor allem in den Fällen wo keine Innenverkleidung 5 angewendet wird, und deshalb Bolzen 6 oder dergleichen an sich nicht notwendig sind, ist der Endflansch 21 überflüssig. Die Längsverbindungslippe 20 wird in diesem Fall mit etwa demgleichen Spiel S nahe entlang der Seitenwand 11 der Rinne 4 verlegt (Figur 3), damit nach dem Einschnappen der Verbindung die Verbindungslippe 20 gegen die Wand 11 mit z. B. einer oder mehreren Blindnieten gezogen werden kann. In Figur 4 ist eine Ausführungsform abgebildet, bei der die Verbindungslippe 20 an der linken Seite der Figur als Verlängerung der Widerhakenrippe 15 angeordnet ist. Ein etwas grosserer Spalt S ist dann zwischen der Längsverbindungslippe 20 und der linken Seitenwand 13 der Rinne 4 erwünscht. In der gleichen Weise wie oben beschrieben kann mit der Hilfe von z. B. Blindnieten nach der Einschnappmontage die Verbindungslippe 20 fest angedrückt mit der Seitenwand 13 verbunden werden.

Dank der Erfindung wird der bedeutende Vorteil erzielt, dass sich die neue zusätzliche Verbindung über die ganz Höhe der Wand erstreckt, wodurch eine hochwertige selbsttragende Funktion erzielt wird. Bei der Montage einer Innenverkleidung hat man den Vorteil, dass bereits vorhandene durchgehende Befestigungselemente zwischen den Platten 1 und 2 verwendet werden, weshalb keine zusätzlichen benötigt sind. Weil das berüchtigte Schränken der bekannten Konstruktionen dank der Erfindung ebenso vermieden wird, wird es bei lokalem Schaden meistens möglich, durch Ersetzen einiger Platten den Behälter wieder zu reparieren, ohne dass der ganze Behälter verloren wäre.

Ein Nebenvorteil besteht darin, dass bei allen Ausführungsformen die Bolzen oder Nieten von aussen ausser Sicht bleiben, wodurch die Aussenwände vollkommen flach werden. In den Figuren 1 und 2 ist in der Aussenwand eine Öffnung 18 abgebildet, um den abgebildeten Nietbolzen 6 durchführen zu können. Bei dieser Ausführung werden nach der Endmontage die Öffnungen 18 mit entweder Streifen oder Stopfen verschlossen. Jedoch können die Öffnungen 18 auch vermieden werden, indem die abgebildeten Verbindungsmittel 6 durch einseitig montierbare Verbindungselemente, wie z. B. Blindnieten, welche von der Innenseite aus montiert werden, ersetzt werden. Auch könnten z. B. Schweiss- oder Bördelmuttern an der Innenseite der Endflansche 21 oder Lippen 20 vormontiert werden, in welche nach beendeter Montage von innen aus Bolzen 6 eingeschraubt und nachgezogen werden.

Es versteht sich, dass auch andere konstruktive Kombinationen, wie z. B. die Anwendung eines Endflansches 21 bei der Ausführung nach Figur 4, innerhalb des Rahmens der Erfindung liegen.

**Patentansprüche**

1. Wandkonstruktion eines Behälters, eines Fahrzeugaufbaues oder eines containers, gebildet durch eine Reihe durch Schnappverriegelungen (snap-lock) miteinander verbundener, im wesentlichen gleicher Platten (1, 2, ...), wie z. B. stranggepressten Leichtmetallprofilen, wobei an einer Seite (meistens der Aussenseite des Behälters) eine durchgehend ebene Seitenwandoberfläche gebildet wird, während an der anderen Seite bei jeder Verbindung ein im wesentlichen kastenförmiger Ständer (19) gebildet ist, wobei jede Platte an ihrer einen Längskante mit einem rinnenförmigen Profil (4) versehen ist, dessen Öffnung hauptsächlich in der Ebene der Platte gelegen ist, mit einer am Rand befindlichen, einwärts gerichteten, widerhakenförmigen Rippe (14) und mit einem im Gebiet des Ueberganges des ebenen Plattenteiles in die anschliessende Rinnenwand (11) vorgesehenen Teil eines Einsteckscharniers (7), während an der anderen Längskante jeder Platte beim Ende des ebenen Plattenteiles (3) ein komplementäres Gegenstück des Einsteckscharniers (7) und in einiger Entfernung davon an der Plattenoberfläche eine komplementäre widerhakenförmige Gegenrippe (15, 16) vorgesehen ist, welches Gegenstück und welche Gegenrippe an der gleichen Seite der Platte wie die Rinne gelegen sind, derart, dass die Rippen (14, 15, 16) und Scharnierteile (7) sich alle parallel zueinander erstrecken und so weit von einander entfernt sind, dass nach dem Einstecken der komplementären Scharnierteile (8a, 8b, 8c, 9 ; 7) zweier Platten ineinander und dem darauffolgenden Verschwenken der beiden entgegengesetzt gerichteten Rippen mit Widerhaken zueinander, die Rippen unter einer Normalkraft elastisch aneinander entlang und verriegelnd hintereinander einschnappbar sind, damit die Platten (1, 2, ...) in einer einzigen Ebene senkrecht zur Schnappverbindung kraftschlüssig im wesentlichen bleibend miteinander verbunden sind, wobei an jenem Teil (3) einer Platte (1), welcher bei Montage mit der Rinne (4) der nächsten Platte (2) zusammenwirkt, ein in diese Rinne hineinragende Längslippe (20), welche im eingeschnapten Zustand parallel zur nächsten Rinnenwand (11, 12, 13) verläuft, vorgesehen ist, dadurch gekennzeichnet, dass die Längslippe (20) als Längsverbindungslippe mit einer oder mehreren Bolzenverbindungen (6) oder dergleichen an der Rinne (4) befestigbar ist, von welcher Längsverbindungslippe sich der Bereich der (Bolzen) Verbindung nach dem Einschnappen in der Nähe der Rinne (4) unter Bildung eines geringen Spaltes (S) erstreckt, derart dass dieser Spalt (S) mittels der Bolzenverbindung (6) unter elastischer Verformung der Längslippe verringert wird und zumindest im Bereich der Verbindung (6) die Längslippe (20) fest gegen eine Innenwand der Rinne (4) angezogen ist.

2. Wandkonstruktion nach Anspruch 1, dadurch gekennzeichnet, dass die in die Rinne (4) hineinragende längsverbindungslippe (20) mit einem Endflansch (21) versehen ist, welcher Endflansch (21) sich nach dem einschnappen mit geringem Spalt (S) parallel zum Boden (12) der Rinne erstreckt, wobei mit den Verbindungen (6) die Längsverbindungslippe (20) über den Endflanschen (21) am Boden (12) der Rinne befestigbar ist.

3. Wandkonstruktion nach Ansprüchen 1 oder 2, wobei der Scharnierteil an der Rinne (4) als Einsteckteil (9) und der Kontrascharnierteil (8a, 8b) am Ende der Platte als Aufnahmeteil (8c) ausgebildet ist, dadurch gekennzeichnet, dass die Längsverbindungslippe (20) eine Verlängerung der einen Seitenwand (8a) des Aufnahmeteiles des Einsteckscharniers (7) bildet (Figur 1).

4. Plattenförmiges Konstruktionsprofil vom Schnappverbindungstyp, insbesondere geeignet für Anwendung bei Wänden nach einem oder mehreren der vorhergehenden Ansprüchen, mit einer parallel zur Ebene der Platte (1, 2, ...) verlaufender an der einen Seite befindlicher, im wesentlichen ebener Oberfläche, und an der anderen Seite mit Mitteln zur Herstellung einer Verbindung mit einem nächsten korrespondierenden Profil oder einem anschliessenden anderen Element, wobei die Verbindungsmittel an der einen Längskante der Platte aus einem rinnenförmigen Profil (4) bestehen, wovon die Öffnung im wesentlichen in der Ebene der Platte gelegen ist, welche Rinne am Rand versehen ist mit einer nach innen gerichteten ersten widerhakenförmigen Rippe (14) und in der anschliessenden Rinnenwand im Gebiet des Uebergangs in den ebenen Plattenteil mit einem Teil eines Einsteckscharniers (7), während jene Verbindungsmittel an der anderen Längskante von jeder Platte am Ende des ebenen Plattenteiles (3) aus einem mit dem Einsteckscharnier zusammenwirkenden Kontrascharnierteil (7) und aus einer in einiger Entfernung an der gleichen Seite der Plattenoberfläche mit der ersten (14) zusammenwirkenden widerhakenförmigen Gegenrippe (15, 16) bestehen, welcher Kontrascharnierteil und welche Gegenrippe an der gleichen Seite der Platte wie die Rinne gelegen sind, und wobei die widerhakenförmigen Rippen (14 ; 15, 16) und Scharnierteile (7) sich alle parallel zueinander erstrecken und so weit von einander entfernt sind, dass, nach dem Einstecken der zusammenwirkenden Scharnierteile von zwei zu verbindenden Platten ineinander und dem darauf folgenden Aufeinander-zu-Verschwenken der beiden entgegengesetzt gerichteten Rippen mit Widerhaken, diese unter einer Normalkraft elastisch aneinander entlang und verriegelnd hintereinander einschnappbar sind, damit die Platten in ihrer Ebene senkrecht zur Schnappverbindung formschlüssig und parallel zur Schnappverbindung kraftschlüssig im wesentlichen bleibend miteinander verbunden sind, wobei an jenem Teil (3) einer Platte (1), welcher bei Montage mit der Rinne (4) der nächsten Platte (2) zusammenwirkt, ein in jene Rinne hineinragende längslippe (20), welche im eingeschnappten Zustand parallel zur nachsten Rinnenwand (11, 12, 13) verläuft, vorgesehen ist, dadurch gekennzeichnet, dass die Längslippe (20) sich in ihrer Ebene weiter in die Rinne hineinragend fortsetzt, welche Lippe (20) sich nach dem Einschnappen in der Nähe der Rinne (4) unter Bildung eines geringen Spaltes (S) erstreckt, und wobei die Lippe (20) entweder eine Fortsetzung der am tiefsten in die Rinne hineinragende Seitenwand (8a) des Aufnahmeteiles des Einsteckscharniers (7) bildet (Figuren 1, 3) oder am Fuss des Einsteckscharniers (7) befestigt ist (Figur 2), oder aber eine Fortsetzung der Widerhakenrippe (15, 16) bildet, und wobei die Lippe (20) mit einem Endflansch (21) versehen sein kann, welcher sich im wesentlichen parallel zum Rinnenboden (12) und in dessen Nähe unter Bildung eines geringen Spaltes (S) (Figuren 1, 2) erstreckt.

**Claims**

1. Wall construction for a receptacle, a vehicle body, or a transport container, formed by a series of substantially identical plates (1, 2, ...), such as e. g. extruded light-metal sections, which are connected to one another by snap locks, a continuously level side wall surface being formed at one side (usually the outside of the receptacle) whereas at the other side a substantially box-shaped upright (19) is formed at each connection, each plate being provided at one of its longitudinal edges with a channel-shaped profile (4) the opening of which is situated mainly in the plane of the plate, with an inwardly directed barbed rib (14) situated at the edge and with a part of a push-in hinge (7) arranged in the region of the transition from the level plate part into the adjacent channel wall (11), whereas at the other longitudinal edge of each plate a complementary counter-element of the push-in hinge (7) is provided at the end of the level plate part (3) and, at some distance from the said counter-element, a complementary barbed counter-rib (15, 16) at the plate surface, said counter-element and said counter-rib being situated at the same side of the plate as the channel, in such a manner that the ribs (14, 15, 16) and hinge parts (7) all extend parallel to one another and are spaced at such distances from one another that, after the insertion of the complementary hinge parts (8a, 8b, 8c, 9 ; 7) of two plates in one another and the subsequent pivoting of the two oppositely directed barbed ribs relatively to one another, the ribs are adapted to snap-in under a normal force, elastically along one another, to lock behind one another, so that the plates (1, 2, ...) are connected to one another substantially permanently in force-locking manner in a single plane at right angles to the snap connection, there being provided at that part (3) of a plate (1) which, at assembly, co-operates with the channel (4) of the next plate (2), a longitudinal lip (20) which projects into that channel and which in the snapped-in state extends parallel to the next channel wall (11, 12, 13), characterised in that the longitudinal lip (20) is securable as a longitudinal connection lip with one or more bolt connections (6) to the channel (4), the region of the (bolt) connection of this longitudinal connection lip extending, after the snapping-in operation, in the vicinity of the channel (4) with formation of a slight gap (S), in such a manner that this gap (S) is reduced by means of the bolt connection (6) with elastic deformation of the longitudinal lip, and at least in the region of the connection (6) the longitudinal lip (20) is drawn tightly against an inner wall of the channel (4).

2. Wall construction according to claim 1, characterised in that the longitudinal connection lip (20) projecting into the channel (4) is provided with an end flange (21), which end flange (21) after the snapping-in extends parallel to the bottom of the channel, with a slight gap (S), the longitudinal connection lip (20) being securable to the channel bottom (12) through the agency of the end flanges (21), using the connections (6).

3. Wall construction according to claims 1 or 2, the hinge part on the channel (4) being constructed as an insert part (9) and the counterparts (8a, 8b) of the hinge on the end of the plate being constructed as a reception part (8c), characterised in that the longitudinal connection lip (20) is a prolongation of one side wall (8a) of the reception part of the push-in hinge (7) (Fig. 1).

4. Plate-form construction profile of the snap connection type, especially suitable of use in walls according to one or more of the preceding claims, with a substantially level surface extending parallel to the plane of the plate (1, 2, ...) and situated at one side, and at the other side with means for establishing a connection with the next corresponding profile or an adjacent other element, the connection means at one longitudinal edge of the plate consisting of a channel profile (4) the opening of which is situated substantially in the plane of the plate, this channel being provided at the edge with an inwardly directed first barbed rib (14) and in the adjacent channel wall in the region of the transition to the level plate part with a part of a push-in hinge (7), whilst the connecting means at the other longitudinal edge of each plate at the end of the level plate consist of a hinge counter-part (7) co-operating with the push-in hinge and, at some distance at the same side of the plate surface, of a barbed counter-rib (15, 16) which co-operates with the first barbed rib (14), this hinge counter-part and this counter-rib being situated at the same side of the plate as the channel, and the barbed ribs (14 ; 15, 16) and the hinge parts (7) all being disposed parallel to one another and being so spaced from one another that, after the insertion in one another of the co-operating hinge parts of two plates being connected, and the subsequent swinging towards one another of the two oppositely directed ribs, the latter are adapted to snap-in under a normal force, elastically along one another, to lock behind one another, so that the plates are connected substantially permanently to one another in their plane at right angles to the snap connection in a shape-locking manner and parallel to the snap connection in force-locking manner, and there being provided at that part (3) of a plate (1) which at assembly co-operates with the channel (4) of the next plate (2) a longitudinal lip (20) which projects into that channel and which in the snapped-in state extends parallel to the next channel wall (11, 12, 13), characterised in that the longitudinal lip (20) is continued further in its plane to project further into the channel, and the said lip (20) is disposed in the vicinity of the channel (4) with formation of a slight gap (S) after the snapping-in operation has been carried out, and the lip (20) either forms a prolongation of that side wall (8a) of the reception part of the push-in hinge (7) which projects most deeply into the channel (Figs. 1, 3) or is attached to the base of the push-in hinge (7) (Fig. 2), or forms a prolongation of the barbed rib (15, 16), and the lip (20) may be provided with an end flange (21) which extends substantially parallel to the channel bottom (12) and in the vicinity of the latter, forming a slight gap (S) (Figs. 1, 2).

**Revendications**

1. Construction de paroi d'un réservoir, d'une carrosserie ou d'un conteneur constituée par une série de plaques (1, 2, ...) essentiellement identiques et reliées entre elles par des verrouillages à encliquetage (snap-lock), par exemple des profilés en métal léger extrudé une paroi latérale continue plane étant réalisée sur l'un des côtés (le plus souvent sur la face extérieure du réservoir), tandis que sur l'autre côté, un montant (19) essentiellement en forme de caisson est constitué à chaque jonction, chaque plaque étant munie, à l'un de ses bords longitudinaux, d'un profil (4) en forme de gouttière dont l'ouverture se situe principalement dans le plan de la plaque, avec une nervure (14) en forme de barbe située au bord et dirigée vers l'intérieur ainsi qu'avec un élément de charnière à emboîtement (7) prévu dans la région de la transition de la partie plane de la plaque à la paroi de gouttière (11) qui y fait suite, tandis que, sur l'autre bord longitudinal de chaque plaque est prévu, à l'extrémité de la partie plane de la plaque (3), un élément complémentaire de la charnière à emboîtement (7) et, à quelque distance de celui-ci, sur la surface de la plaque, une nervure complémentaire en forme de barbe (15, 16), ledit élément complémentaire de ladite nervure complémentaire étant disposés du même côté de la plaque que la gouttière de telle façon que les nervures (14, 15, 16) et les éléments de charnière (7) s'étendent tous parallèlement les uns aux autres et qu'ils se trouvent à distance les uns des autres de sorte que, après l'emboîtement des éléments de charnière complémentaires (8a, 8b, 8c, 9 ; 7) de deux plaques et après le pivotement consécutif l'une vers l'autre des deux nervures munies de barbes et dirigées en sens inverse, les nervures, sous l'action d'une force normale, peuvent s'encliqueter élastiquement les unes sur les autres et se verrouiller successivement pour que les plaques (1, 2, ...) soient raccordées de manière essentiellement permanente par adhérence dans un seul plan perpendiculaire à l'assemblage à encliquetage, sur l'élément (3) d'une plaque (1) qui, lors du montage, coopère avec la gouttière (4) de la plaque suivante (2) une lèvre longitudinale (20) étant prévue qui dépasse dans ladite gouttière et qui, à l'état encliqueté, s'étend parallèlement à la paroi de gouttière suivante (11, 12, 13), caractérisée en ce que la lèvre longitudinale (20), en tant que lèvre d'assemblage longitudinal, peut être fixée sur la gouttière (4) au moyen d'un ou de plusieurs boulons d'assemblage (6) ou d'organes analogues, la région du boulonnage, à partir de la lèvre d'assemblage longitudinal, s'étendant, après l'encliquetage, à proximité de la gouttière (4) avec formation d'une légère fente (S) de telle façon que cette fente (S) est réduite au moyen du boulonnage (6) avec déformation élastique de la lèvre longitudinale et que, au moins dans la région de l'assemblage (6), la lèvre longitudinale (20) est bloquée solidement contre une paroi intérieure de la gouttière (4).

2. Construction de paroi selon la revendication 1, caractérisée en ce que la lèvre longitudinale (20) dépassant dans la gouttière (4) est munie d'une bride terminale (21) qui, après l'encliquetage, s'étend avec une légère fente (S) parallèlement au fond (12) de la gouttière, la lèvre longitudinale (20), par l'intermédiaire des brides terminales (21), pouvant être fixée sur le fond (12) de la gouttière au moyen des assemblages (6).

3. Construction de paroi selon l'une des revendications 1 ou 2, avec l'élément de charnière sur la gouttière (4) conformé en élément à emboîtement (9) et l'élément de charnière associé (8a, 8b) conformé en logement (8c) à l'extrémité de la plaque, caractérisée en ce que la lèvre d'assemblage longitudinal (20) constitue un prolongement de l'une des faces latérales (8a) du logement de la charnière à emboîtement (7) (fig. 1).

4. Profilé de construction en forme de plaque du type assemblage à encliquetage, convenant en particulier pour l'utilisation pour des parois, selon l'une quelconque des revendications 1 à 3, avec sur l'un des côtés une surface essentiellement plane parallèle au plan de la plaque (1, 2, ...) et, sur l'autre côté, des organes pour la réalisation d'un assemblage avec un profilé correspondant suivant ou avec un autre élément consécutif, les organes d'assemblage étant constitués, sur l'un des bords longitudinaux de la plaque, par un profilé en forme de gouttière (4) dont l'ouverture se situe essentiellement dans le plan de la plaque et qui est muni, au bord, d'une première nervure (14) en forme de barbe dirigée vers l'intérieur et, dans la paroi de la gouttière contiguë, dans la région de la transition à la partie plane de la plaque, d'un élément d'une charnière à emboîtement (7), tandis que les organes d'assemblage sur l'autre bord longitudinal de chaque plaque, à l'extrémité de la partie plane de la plaque (3), comprennent un élément de charnière complémentaire (7) coopérant avec la charnière à emboîtement et une nervure complémentaire en forme de barbe (15, 16) disposée du même côté de la surface de la plaque, à quelque distance de la première nervure (14) avec laquelle elle coopère, ledit élément de charnière complémentaire et ladite nervure complémentaire se trouvant du même côté de la plaque que la gouttière et les nervures en forme de barbe (14, 15, 16) et les éléments de charnière (7) s'étendant tous parallèlement les uns aux autres avec un écartement tel que, après avoir emboîté des éléments de charnière associés de deux plaques à assembler, plus tourné l'une vers l'autre les deux nervures à barbe dirigées en sens opposé, ceux-ci, sous l'action d'une force normale, peuvent s'encliqueter élastiquement les uns le long des autres et se verrouiller successivement pour que les plaques soient raccordées de manière essentiellement permanente, à savoir à engagement positif dans leur plan perpendiculaire à l'assemblage à encliquetage et par adhérence parallèlement à l'assemblage à encliquetage, sur l'élément (3) d'une plaque (1) qui, lors du montage, coopère avec la gouttière (4) de la plaque suivante (2) une lèvre longitudinale (20) étant prévue qui dépasse dans ladite gouttière et qui, à l'état encliqueté, s'étend parallèlement à la paroi de gouttière suivante (11, 12, 13), caractérisé en ce que la lèvre longitudinale (20) se prolonge dans son plan de façon à dépasser davantage dans la gouttière et s'étend, après l'encliquetage, à proximité de la gouttière (4) avec formation d'une légère fente (S), la lèvre (20) formant un prolongement de la paroi latérale (8a) du logement de la charnière à emboîtement (7) qui dépasse le plus profondément dans la gouttière (fig. 1, 3) ou étant fixée au pied de la charnière à emboîtement (7) (fig. 2) ou encore formant un prolongement de la nervure à barbe (15, 16), et la lèvre (20) pouvant être munie d'une bride terminale (21) laquelle s'étend essentiellement parallèlement au fond de la gouttière (12) et à proximité de celui-ci, avec formation d'une légère fente (S) (fig. 1, 2).

fig-1

fig-2

## fig-3

## fig-4